# EUROPEAN PATENT SPECIFICATION

(11) **EP 1 671 181 B1**
(45) Date of publication and mention of the grant of the patent: **31.01.2007**
(21) Application number: 03768095.6
(22) Date of filing: 06.10.2003
(51) Int. Cl.: G03B 15/06, G03B 17/53

(54) **TRANSPORTABLE PHOTOGRAPHIC BOOTH**
TRANSPORTABLE PHOTOKABINE
CABINE PHOTOGRAPHIQUE TRANSPORTABLE

(43) Date of publication of application: 21.06.2006
(73) Proprietor: Italdata Ingegneria Dell'Idea S.p.A., 00128 Roma (IT)
(72) Inventor: BOCCACCI, R. c/o Italdata Ingegneria dell'Idea SPA, I-00128 Roma (IT)
(74) Representative: Raimondi, Adriana
(86) International application number: PCT/IT2003/000599
(87) International publication number: WO 2005/033793

(56) References cited:
- US-A- 5 383 099
- US-A- 5 828 908
- PATENT ABSTRACTS OF JAPAN vol. 1999, no. 12, 29 October 1999 (1999-10-29) -& JP 11 174577 A (SNK:KK), 2 July 1999 (1999-07-02)

## Description

The present invention relates to portable equipment for taking identification photographs, capable of being mounted on a wall or on the container used for carrying it.

The increasing demand for security in present-day society makes personal identification apparatus ever more necessary. Particularly as a result of well-known phenomena of migration, persons detained for routine identification are increasingly often found to possess no documents. This makes it necessary to take identification photographs of detained persons.

It is known that there are central police offices for personal identification in which identification photographs are also taken, but these are not sufficient to carry out the vast quantity of work required of them, this work also entailing the transport of detained persons to these central offices.

To resolve this problem, one object of the invention is to provide reliable and easily operated equipment for taking identification photographs.

Another object of the present invention is to provide equipment for taking identification photographs which is easily transportable to places where it is required, and can also be used in a fixed location.

Another object of the invention is to enable identification photographs to be taken without the need for closed environments.

A further object of the invention is to permit the very rapid dismantling and reassembly of equipment for taking identification photographs.

What is provided according to the present invention is portable equipment for taking identification photographs, capable of being mounted on a wall or on the container used for carrying it, the equipment comprising:
- a vertically extending base, provided with a bracket for connection to a support frame and having a prismatic pair, with a longitudinal guide integral with the base and a sliding block which is slidable upwards and downwards by vertical movement means under the control of limit switches,
- a motor unit, fixed to the base and comprising motor means and means of transmitting the motion to the means for the vertical movement of the sliding block along the guide,
- an upright fixed on the sliding block and provided with an ultrasonic height meter;
- a horizontally extending frame supported by the upright and in turn supporting:
   - sheet holders and corresponding vertical background sheets for a posing space, of which two lateral sheets are positioned opposite each other, each having a central aperture, and a third, rear sheet is positioned orthogonally with respect to the first two sheets;
   - at least three digital video cameras, with corresponding lamps for illumination, namely a front video camera opposite the third cloth and two lateral video cameras passing through the corresponding central apertures of the two lateral cloths, the at least three video cameras being aimed toward the posing space for simultaneously photographing the face of a subject frontally and in profile from both sides, and for recording it in three instantaneous images in digital form;
   - a control device, comprising a microprocessor connected for operation via a control card to the motor means, the limit sensors, the ultrasonic height gauge, the illuminating lamps of the video cameras and the video cameras themselves, and connected to an operating device for taking, selecting and storing the identification photographs.

The present invention will now be described with reference to its embodiments, with reference to the figures of the attached drawing, in which:
Figure 1 shows a schematic side view of an embodiment of the equipment fixed by means of a frame to a fixed wall;
Figure 2 shows a schematic perspective view of the embodiment of the equipment mounted on its carrying container;
Figure 3 shows a plan view from the above of the equipment of Figure 2;
Figure 4 shows a front view, taken in the direction of the arrow F, of the equipment of Figure 2, with parts shown as transparent for convenience of description;
Figure 5 shows a schematic functional block diagram of the equipment according to the present invention;
Figure 6 shows a perspective view of the closed container of the equipment;
Figure 7 shows a schematic front view of the equipment partially dismantled and housed in the case of its portable container; and
Figure 8 shows a schematic front view of the equipment partially dismantled, the remainder of the equipment being housed in a lid of the portable container shown in Figure 7.

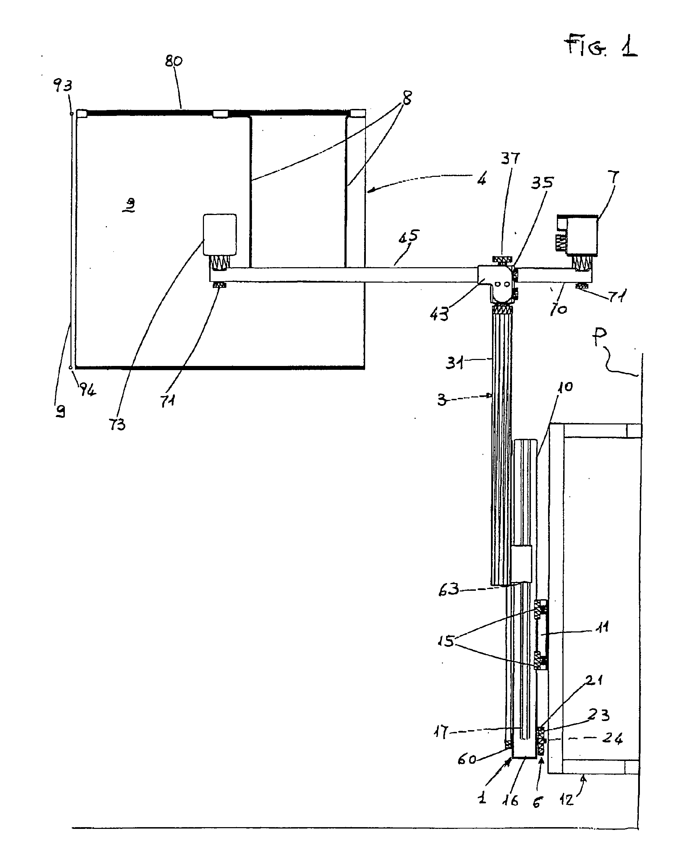

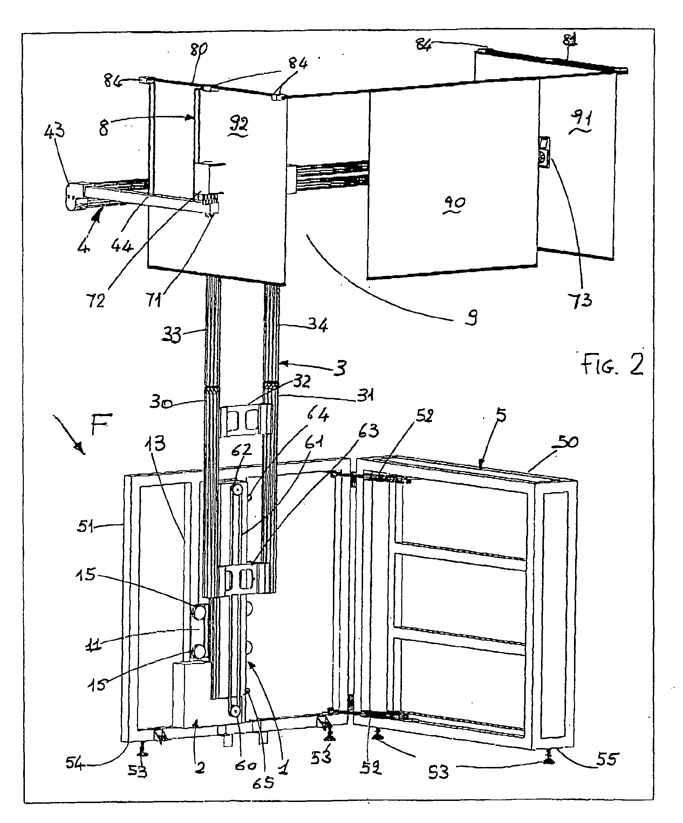

With reference to the drawings, Figures 1 and 2 show a first embodiment of the equipment, mounted, respectively, on a wall (shown in a side view), and on its carrying container (shown in perspective). In the illustration, the number 1 indicates a vertically extending base, 2 indicates a motor unit, 3 indicates an upright, and 4 indicates a horizontally extending frame for holding video cameras and background sheets to form a posing space.

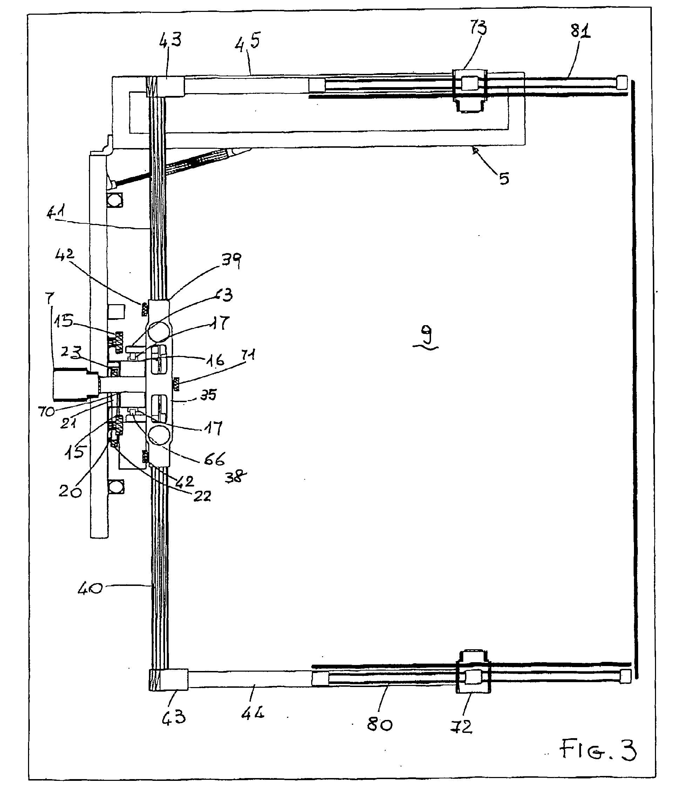

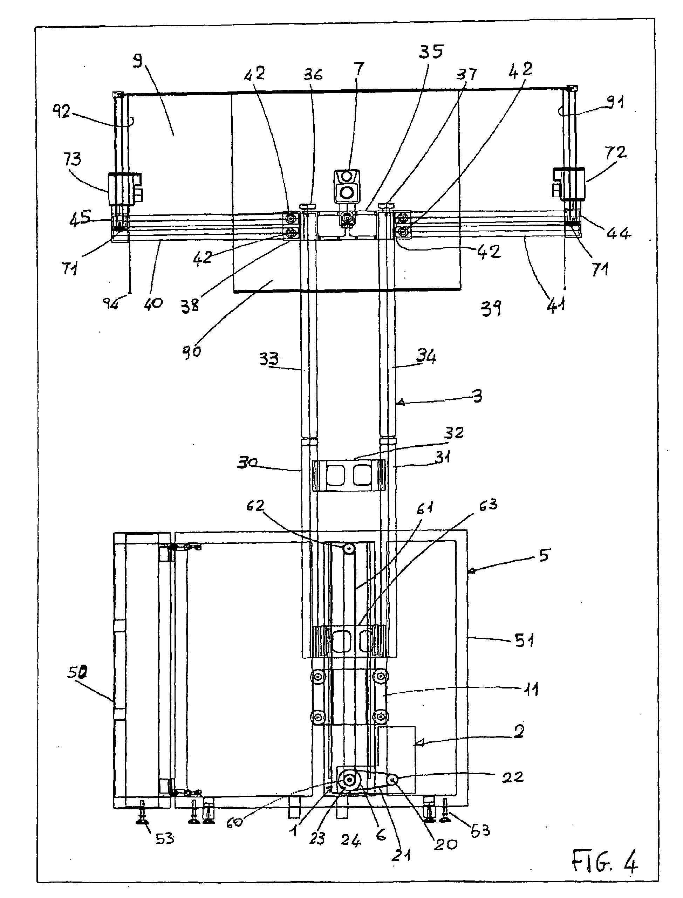

As shown also with reference to Figures 3 and 4, which are, respectively, a plan view from above and a front view of the equipment according to the invention mounted on its container, the vertically extending base 1 is in the shape of a flattened parallelepiped. As shown in Figure 1, the base I has a face 10 to which is fixed a connecting bracket 11 for a support frame 12 on a wall P.

Alternatively, as shown in Figures 2 to 4, the base 1 is fixed by means of the connecting bracket 11 to a support frame 13 (shown more clearly in Figure 2) forming part of the structure of a container 5 of the equipment.

The connecting bracket 11, essentially shaped in the form of the character Ω, to create a space between the base and the support frame, can be mounted very rapidly by means of knurled screws 15.

The base 1 has narrow vertical sides 16, on which corresponding guides 17, of the dovetail type for example, are mounted. The base 1 also has a front face 18 on which a movement device 6 for the upright 3 is mounted, as explained below.

The motor unit 2 is integral with the base 1, as shown more clearly in Figures 2 and 4. The motor unit 2 contains an electric motor (not shown) whose shaft 20 projects toward the front. A belt 21 runs round a pulley 22 keyed on the shaft 20 and round a pulley 23, having a greater diameter than the pulley 22, keyed on a shaft 24 mounted on said motor unit 2.

A pulley 60 of the movement device of the upright 3 is mounted on said shaft 24, at the opposite end to the pulley 23.

A toothed belt 61 is made to run round the pulley 60 and round a pulley 62 mounted on an upper part of the base 1.

A sliding block 63 is fixed on one side of the toothed belt 61 in such a way that it moves upwards and downwards with the belt, according to the direction of rotation of the motor shaft 20 of the motor unit 2. The movement of the sliding block 63 is controlled by limit switches 64 and 65 (shown schematically in Figure 2).

As shown in Figure 3, the sliding block 63 has prismatic elements 66 engaging with the dovetail guides 17 of the base 1.

The base of the upright 3 is fixed to the sliding block 63. The upright 3, fixed to the sliding block 63, preferably consists of two parallel tubular elements 30 and 31, held together by the sliding block 63 and by at least one other similar interconnecting element 32.

Additional tubular extension elements 33 and 34 (Figures 2 and 4) can be inserted into the tubular elements 30 and 31, the additional elements being interconnected by a top cap 35, fixed with knurled screws 36 and 37 to the tubular elements 33 and 34. An ultrasonic height meter of a conventional type is fixed on the upright.

A first video camera 7 is fixed on the top cap 35 by means of a rear support 70, with the aid of knurled screws indicated in a general way by 71.

The top cap 35 has opposing orthogonal connectors 38 and 39 into which are inserted first arms 40 and 41 of the horizontally extending frame 4. The arms 40 and 41 are made individually in the form of a pair of tubular elements inserted into the opposing connectors 38 and 39 of the top cap 35 and retained there by means of knurled screws, indicated in a general way by 42.

At the ends of the arms 40 and 41 there are mounted connectors, indicated in a general way by 43, for angular connection to corresponding second arms 44 and 45, orthogonal to the first arms, of the horizontal frame 4. The ends of the arms 44 and 45 hold corresponding video cameras, namely a second video camera 72 and a third video camera 73, positioned vertically and fixed with knurled screws 71. The video cameras 72 and 73 are the side video cameras.

The second arms 44 and 45 of the frame 4 support sheet holders, indicated in a general way by 8, and corresponding vertical background sheets, indicated by 90, 91 and 92 respectively, to form a parallelepipedal posing space indicated by 9 in Figures 2 to 4, within which the person's face must be positioned for the identification photograph.

Each sheet holder 8 comprises at least one pair of facing top bars 80 and 81, supported by pairs of vertical angled rods, indicated in a general way by 82 and 83. The lower ends of the angled rods 82 and 83 are inserted in corresponding holes formed in the lateral arms 44 and 45 and their upper ends are inserted in through holes indicated in a general way by 84.

Simple elastic clamping means (not shown in the drawing) for the sheets are provided on the pairs of bars. Each sheet has upper supporting rods 93 and lower stretching rods 94. The rods can pass through slots formed in the upper and lower edges of the sheets.

The central sheet 90 is positioned in front of the video camera 70, and preferably has an elongated upper rod 93 which can rest on the free ends of the bars 80 and 81 to form a link between them. The two side sheets 91 and 92 have their upper rods 93 gripped in a parallel configuration by the elastic clamps of the corresponding side bars 80 and 81.

The side sheets 91 and 92 are provided with central apertures, through which the front parts of the side video cameras 72 and 73 pass.

The video cameras 7, 72 and 73 are digital video cameras, provided with corresponding illuminating lamps. The video cameras are aimed toward the posing space 9, and can photograph the face of a subject simultaneously from the front and in profile from both sides. The three images, in digital form, are recorded at the same instant and stored.

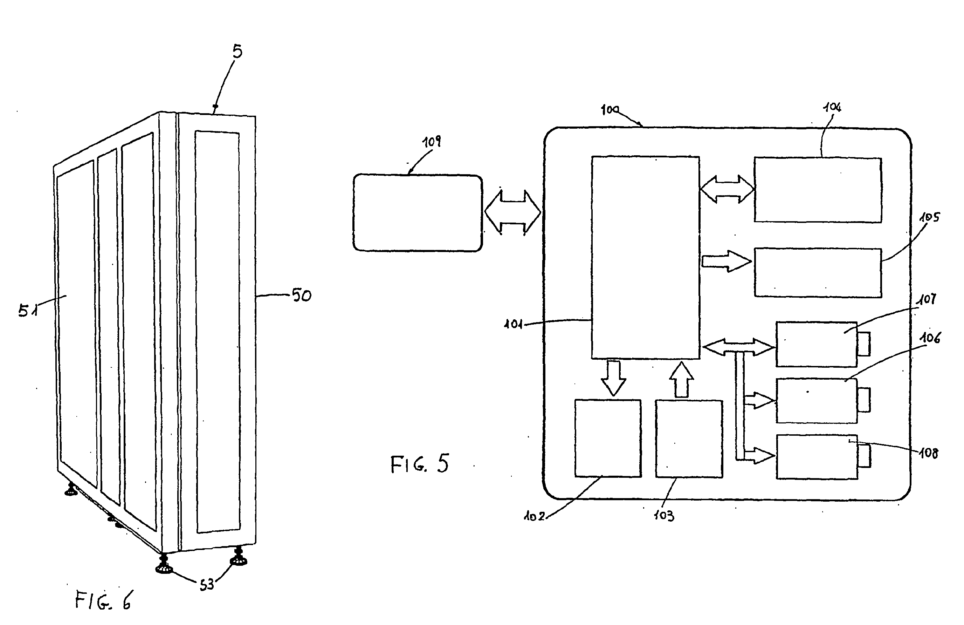

With reference to Figure 5, this shows a block diagram indicating the general outlines of the operating connections. In this figure, the number 100 indicates the whole of a control device, preferably installed in the motor unit of the equipment and comprising a microprocessor (block 101) connected for operation by means of a control card to the motor (block 102), the limit switches 64 and 65 (block 103), the ultrasonic height meter (block 104), the video camera illumination lamps (block 105) and the central video camera (block 105) and side video cameras (blocks 106 and 107). The control device is connected to an operating device (block 109) of a known type for taking, selecting and storing the identification photographs.

When the equipment according to the invention is to be installed where a fixed supporting structure cannot be used, its container acts as a pedestal as shown clearly in the figures. The container 5, which has rigid walls and is easily transportable, has a case 50 and a lid 51 on which the base 1 is removably fixed. The lid 51 is joined to the case 50 by means of what are known as gas springs, and the two parts have feet 53 on their adjacent narrow sides 54 and 55. When closed, the container of the equipment appears as shown in Figure 6.

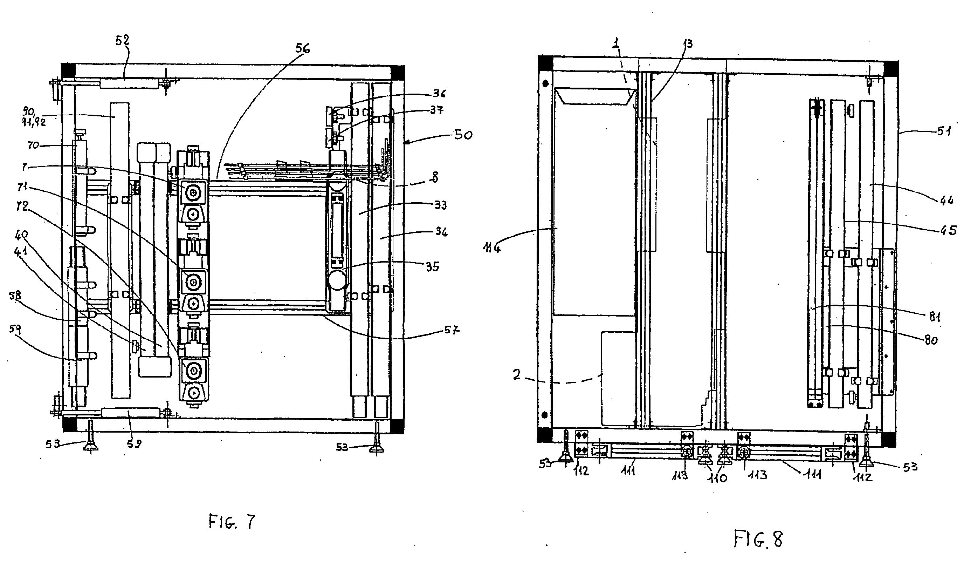

Reference will now be made to Figures 7 and 8, which are front views of the case 50 and lid 51 of the portable container 5, with the equipment housed inside it. The upright extensions 33 and 34, the corresponding top cap 35 in one of its variant designs, with corresponding screws 36 and 37, the sheet support bars 8, the rolled-up sheets 90, 91 and 92, the video cameras 7, 71 and 72, the upright frame arms 40 and 41 in a single tube version, a horizontal arm 70 for the central video camera, and smaller upright extensions 58 and 59 are housed on suitable horizontal racks 56 and 57 in the case 50.

Additional feet 110, 110, which can be opened by means of hinged arms 111, 111 about their fixing bracket 112 to extend the lid support area, are shown in the lid 51. The arms 111 are retained by corresponding stops 113, 113. Holders for the side arms of the frame 44 and 45, the upper sheet support bars 80 and 81, and auxiliary cables in an envelope 114 are stored in the lid 51. The base 1 and the motor unit 2 are fixed on the support frame as indicated in outline by the broken lines.

## Claims

1. Portable equipment for taking identification photographs, capable of being mounted on a wall or on the container used for carrying it, the equipment comprising:
- a vertically extending, base (1), provided with a bracket (11) for connection to a support frame (12), and having a pair of prismatic elements (66) with a longitudinal guide (17) integral with the base and a sliding block (63) which is slidable upwards and downwards by means of vertical movement means (60-62) under the control of limit switches (64, 65),
- a motor unit (2), fixed to the base and comprising motor means and means (20-24) for transmitting the motion to the means (60-62) for the vertical movement of the sliding block along the guide,
- an upright element (3) fixed on the sliding block and provided with an ultrasonic height meter (104);
- a horizontally extending frame (4) supported by the upright element and on its turn supporting:
sheet holders (8) and corresponding vertical background sheets (90-92) forming a posing space between them, of which two lateral sheets (91, 92) are positioned opposite each other, each having a central aperture, and a third (90), rear sheet is positioned orthogonally with respect to the first two sheets;
- at least three digital video cameras (7, 71, 72) with corresponding lamps for illumination, namely a front video camera (7) opposite the third sheet and two lateral video cameras (71, 72) passing through the corresponding central apertures of the two lateral sheets, the at least three video cameras being aimed toward the posing space for simultaneously photographing the face of a subject frontally and in profile from both sides, and for recording it in three instantaneous images in digital form;
- a control device (100), comprising a microprocessor (101) connected for operation via a control card (102) to the motor means, the limit sensors, the ultrasonic height gauge, the illuminating lamps of the video cameras and the video cameras themselves, and connected to an operating device (109) for taking, selecting and storing the identification photographs.

2. The portable equipment as claimed in claim 1, wherein said vertically extending base (1) is in the shape of a flattened parallelepiped, having one face (10) opposite the posing space to which is fixed the bracket (11) for connection to the support frame, sides with dovetail guides (17) engaging with corresponding profiles for the sliding of the sliding block, and one face (18) pointing towards the posing space, on which are mounted vertical movement means in the form of a toothed belt (61) integral with the sliding block, running round corresponding end pulleys (60, 62).

3. The portable equipment as claimed in claim 1, wherein the motor means of the motor unit comprise an electric motor, whose shaft (20) projects from the motor unit on the opposite side to the posing space, and the means of transmitting the motion to the means for the vertical movement of the sliding block include a flexible transmission between a pulley (22) integral with the shaft (20) of the electric motor and a pulley (23) associated with said movement means.

4. The portable equipment as claimed in claim 1, wherein the upright element fixed on the sliding block consists of two parallel tubular elements (30, 31), additional tubular elements (33, 34) interconnected by the sliding block and by at least one other transverse stiffening member including a top cap (35) carrying the front video camera (7).

5. The portable equipment as claimed in claim 1, wherein said horizontally extending frame comprises first arms (40, 41) connected laterally to the upright element and extending into second lateral arms (44, 45), orthogonal to the first, each of which carries a side video camera (71, 72) and corresponding sheet holders.

6. The portable equipment as claimed in claims 1 and 5, wherein each sheet holder (8) comprises at least one pair of facing upper bars (80, 81) supported by a corresponding multiplicity of pairs of vertical rods (82, 83) with their lower ends inserted in said lateral arms (44, 45); the lateral background sheets, reinforced at the top and bottom by rods (93, 94), being gripped parallel to the corresponding lateral bars, while the rear sheet is supported by the ends of the bars.

7. The portable equipment as claimed in claim 1, wherein the bracket for connection to the support frame is in the shape of the character Ω, and is connected to the frame by means of knurled screws (15).

8. The portable equipment as claimed in claim 1, wherein the base support frame is fixed to a wall (P) of a building.

9. The portable equipment as claimed in claim 1, wherein the base support frame is fixed to the inner part of the lid (51) of a flattened parallelepipedal container (5) with rigid walls, comprising a case to which the lid is hinged, this container acting when opened as a pedestal for the equipment.

10. The portable equipment as claimed in claim 9, wherein the lid and the case of the container are interconnected by gas springs (52), the case and the lid having feet (53) on their adjacent narrow sides.

11. The portable equipment as claimed in claim 9, wherein the container comprises, on one narrow side of the lid, additional feet (110, 111) which can be opened by means of hinged brackets to increase their supporting surface.

12. The portable equipment as claimed in claim 9, wherein the case has racks (56, 57) for the storage of upright extensions (48, 49) the corresponding top cap, sheet holding rods, sheets, video cameras, upright frame arms, and a horizontal arm for the central video camera.

13. The portable equipment as claimed in claim 9, wherein the lid of the case contains lateral arms of the frame, top sheet holder bars and auxiliary cables.

## Patentansprüche

1. Tragbare Ausrüstung zum Erstellen von Identifikations-Fotografien, die an einer Wand oder an einem Container, der zum Tragen verwendet wird, umfassend:
- einen vertikal verlaufenden Ständer (1), der mit einer Klammer (11) zum Anschluss an einen Tragrahmen (12) versehen ist und mit einem Paar prismatischer Elemente (66) mit einer längs verlaufenden Führung (17), die in dem Ständer integriert ist, und einem Gleitblock (63), der mittels vertikaler Bewegungsmittel (60-62) unter der Kontrolle von Begrenzungsschaltern (64, 65) vertikal auf- und abwärts bewegbar ist,
- eine Motoreinheit (2), die an dem Ständer befestigt ist und die Motormitteln und Mittel (20-24) umfasst, die die Bewegung zum vertikalen Verstellen des Gleitblocks entlang der Führung auf die Mittel (10 - 12) überträgt,
- ein aufrecht stehendes Element (3), das an dem Gleitblock befestigt und mit einem Ultraschall-Höhenmesser (104) ausgestattet ist,
- einen sich horizontal erstreckenden Rahmen (4), der von dem aufrecht stehenden Element und seinem Drehlager unterstützt wird,
- Blatthalter (8) und korrespondierende vertikale Hintergrundsblätter (90 - 92), die einen Posingraum zwischen sich bilden, von denen zwei seitliche Blätter (91) gegenüberliegend positioniert sind, die je eine zentrische Öffnung aufweisen und ein drittes hinteres Blatt (90) mit Bezug auf die beiden ersten Blätter orthogonal angeordnet ist,
- mindestens drei digitale Videokameras (7, 71, 72) mit korrespondierenden Lampen zur Beleuchtung, und zwar eine Frontvideokamera (7) gegenüber dem dritten Blatt und zwei seitliche Videokameras (71, 72), die durch die entsprechenden zentrischen Öffnungen der beiden seitlichen Blätter hindurchreichen, wobei mindestens drei Videokameras in Richtung des Posingraums ausgerichtet sind, um gleichzeitig das Gesicht des Subjekts frontal und im Profil von beiden Seiten zu fotografieren und zur Aufnahme von drei Sofort-Abbildungen in digitaler Form,
- eine Steuervorrichtung (100), die einen Mikroprozessor (101), der zum Betrieb mittels einer Steuerkarte (102) an die Motormittel, die Begrenzungssensoren, den Ultraschall-Höhenmesser, die Beleuchtungslampen der Videokameras und auch die Videokameras selbst angeschlossen ist und, die zur Aufnahme, Auswahl und zur Speicherung der Identifikationsfotos an eine Betriebsvorrichtung (109) angeschlossen ist.

2. Tragbare Ausrüstung nach Anspruch 1, wobei der besagte sich vertikal erstreckende Ständer (1) in der Form abgeflacht parallel flach ausgebildet ist und eine Oberfläche (10) gegenüber dem Posingraum, an der die Klammer (11) zur Befestigung des Tragrahmens angeschlossen ist, Seiten, die SchwalbenschwanzFührungen aufweisen, die zur Verschiebung des Gleitblocks mit korrespondierenden Profilen ausgestattet sind, und eine in Richtung des Posingraums ausgerichtete Oberfläche (18) aufweist, auf der vertikal bewegliche Stellmittel in Form von zahnriemen (61) vorgesehen, die in den Gleitblock integriert sind und die um entsprechende End-Riemenscheiben (60, 62) umlaufen.

3. Tragbare Ausrüstung nach Anspruch 1, wobei die Motormittel der Motoreinheit einen elektrischen Motor umfassen, dessen Welle (20) sich von der Motoreinheit auf der gegenüberliegenden Seite in Richtung des Posingraums erstreckt und die Mittel zur Übertragung der Bewegung auf die Elemente zur Vertikalverstellung des Gleitblocks eine flexible Transmission zwischen der auf der Welle (20) integrierten Riemenscheibe (22) und der an die Bewegungsmittel angeschlossenen Riemenscheibe (23) einschließen.

4. Tragbare Ausrüstung nach Anspruch 1, wobei das aufrecht auf dem Gleitblock fixierte Element aus zwei parallel verlaufenden Rohrelementen (30, 31) besteht, wobei zusätzliche rohrförmige Elemente (33,34), die mittels des Gleitblocks und mindestens einem quer verlaufenden Versteifungselement verbunden sind, das eine obere Kappe (35) aufweist, die Front-Videokamera (7) tragen.

5. Tragbare Ausrüstung nach Anspruch 1, wobei der besagte, sich horizontal erstreckende Rahmen erste Arme (40, 41) umfasst, die seitlich an das aufrecht stehende Element angeschlossen sind und sich in zweite seitliche Arme (44, 45) erstrecken, die orthogonal zu den ersten Armen angeordnet sind, wobei ein jeder eine seitliche Videokamera (71, 72) und entsprechende Blatt-Halterungen trägt.

6. Tragbare Ausrüstung nach Anspruch 1 und 5, wobei jeder Blatt-Halter (8) zumindest ein Paar obere Auflageträger (80, 81) aufweist, die von zahlreichen korrespondierenden Paaren vertikaler Stangen (82, 83) getragen werden, wobei ihre unteren Enden in besagte seitliche Arme (44, 45) eingesteckt sind, wobei die seitlichen Hintergrund-Blätter, die oben und unten mittels Stangen (93, 94) gegriffen werden, parallel zu den korrespondieren seitlichen Trägern, während die hinteren Blätter an den Enden der Träger unterstützt sind.

7. Tragbare Ausrüstung nach Anspruch 1, wobei die Halterung zum Anschluss des Tragrahmens die Form eines Ω aufweist und mit Hilfe von kordierten Schrauben (15) an den Rahmen angeschlossen ist.

8. Tragbare Ausrüstung nach Anspruch 1, wobei der Ständer-Tragrahmen an einer Wand (8) eines Gebäudes befestigt ist.

9. Tragbare Ausrüstung nach Anspruch 1, wobei der Basis-Tragrahmen an den inneren Teil einer Klappe (50) eines abgeflachten parallel flachen Containers (5) mit steifen Wänden angeschlossen ist, der einen Kasten umfasst, an den die Klappe angelenkt ist, wobei der Container in offener Stellung als Untersatz für die Ausrüstung dient.

10. Tragbare Ausrüstung nach Anspruch 9, wobei die Klappe und der Behälter des Containers mittels Gasdruckfeder (52) verbunden sind und an ihren anliegenden Schmalseiten Füße (53) aufweisen.

11. Tragbare Ausrüstung nach Anspruch 9, wobei der Container an einer schmalen Seite der Klappe zusätzliche Füße (110, 111) aufweist, die mittels Gelenkhaltern in Position gebracht werden können, um die Standfläche zu vergrößern.

12. Tragbare Ausrüstung nach Anspruch 9, wobei der Behälter Ablagen (56, 57) zur Unterbringung der aufrecht stehenden Verlängerungen (58, 59), der korrespondierenden obersten Kappe, der Blatthalterstangen, der Blätter, der Videokameras, der aufrecht stehenden Rahmenträger und eines horizontalen Arms für die zentrale Videokamera aufweist.

13. Tragbare Ausrüstung nach Anspruch 9, wobei die Klappe des Behälters seitliche Arme des Rahmens, oberste Blatthalterträger und Hilfskabel enthält.

## Revendications

1. Equipement portable destiné à prendre des photographies d'identification, qui peut être monté sur une paroi ou sur le réceptacle utilisé pour le transporter, l'équipement comportant :
- une base s'étendant verticalement (1), pourvue d'un support (11) pour le raccordement à un bâti de support (12) et ayant une paire d'éléments prismatiques (66) avec un guide longitudinal (17) d'un seul tenant avec la base et un bloc coulissant (63) qui peut coulisser vers le haut et vers le bas à l'aide de moyens de mouvement vertical (60 à 62) sous la commande de contacteurs de limite (64, 65),
- une unité de moteur (2) fixée sur la base et comportant des moyens de moteur et des moyens (20 à 24) destinés à transmettre le mouvement aux moyens (60 à 62) pour le mouvement vertical du bloc coulissant le long du guide,
- un élément vertical (3) fixé sur le bloc coulissant et pourvu d'un dispositif de mesure de hauteur à ultrasons (104),
- un bâti s'étendant horizontalement (4) supporté par l'élément vertical et supportant à son tour :
- des supports de feuille (8) et des feuilles d'arrière-plan verticales correspondantes (90 à 92) formant un espace de pose entre eux dont deux feuilles latérales (91, 92) sont positionnées à l'opposé l'une de l'autre, chacune ayant une ouverture centrale, et une troisième feuille arrière (90) est positionnée perpendiculairement par rapport aux deux premières feuilles,
- au moins trois caméras vidéo numériques (7, 71, 72) avec des lampes correspondantes pour l'éclairage, c'est-à-dire une caméra vidéo avant (7) opposée à la troisième feuille et deux caméras vidéo latérales (71, 72) passant à travers les ouvertures centrales correspondantes des deux feuilles latérales, les au moins trois caméras vidéo étant pointées vers l'espace de pose afin de photographier simultanément le visage d'un sujet de face et de profil des deux côtés, et afin de l'enregistrer en trois images instantanées sous forme numérique,
- un dispositif de commande (100) comportant un microprocesseur (101) relié pour fonctionnement par l'intermédiaire d'une carte de commande (102) aux moyens de moteur, aux capteurs de limite, au dispositif de mesure de hauteur à ultrasons, aux lampes d'éclairage des caméras vidéo et aux caméras vidéo elles-mêmes, et relié à un dispositif d'actionnement (109) afin de prendre, sélectionner et enregistrer les photographies d'identification.

2. Equipement portable selon la revendication 1, dans lequel ladite base s'étendant verticalement (1) est sous la forme d'un parallélépipède aplati, ayant une face (10) opposée à l'espace de pose sur laquelle est fixé le support pour le raccordement au bâti de support, des côtés avec des guides en queue d'aronde (17) engageant des profils correspondants pour le coulissement du bloc coulissant, et une face (18) pointant vers l'espace de pose, sur laquelle sont montés des moyens de mouvement vertical sous la forme d'une courroie crantée (61) d'un seul tenant avec le bloc coulissant, s'étendant autour de poulies d'extrémité correspondantes (60, 62).

3. Equipement portable selon la revendication 1, dans lequel les moyens de moteur de l'unité de moteur comportent un moteur électrique, dont l'arbre (20) dépasse de l'unité de moteur sur le côté opposé à l'espace de pose, et les moyens de transmission du mouvement aux moyens pour le déplacement vertical du bloc coulissant comprennent une transmission flexible entre une poulie (22) d'un seul tenant avec l'arbre (20) du moteur électrique et une poulie (23) associée aux dits moyens de déplacement.

4. Equipement portable selon la revendication 1, dans lequel l'élément vertical fixé sur le bloc coulissant se compose de deux éléments tubulaires (30, 31), d'éléments tubulaires additionnels (33, 34) interconnectés par le bloc coulissant et par au moins un autre élément de rigidification transversal comprenant un bouchon supérieur (35) portant la caméra vidéo avant (7).

5. Equipement portable selon la revendication 1, dans lequel ledit cadre s'étendant horizontalement comprend des premiers bras (40, 41) reliés latéralement à l'élément vertical et s'étendant dans des deuxièmes bras latéraux (44, 45) perpendiculaires au premier, chacun portant une caméra vidéo latérale (71, 72) et des supports de feuille correspondants.

6. Equipement portable selon les revendications 1 et 5, dans lequel chaque support de feuille (8) comprend au moins une paire de barres supérieures en regard (80, 81) supportées par une multiplicité correspondante de paires de tiges verticales (82, 83) avec leurs extrémités inférieures insérées dans lesdits bras latéraux (44, 45), les feuilles d'arrière-plan latérales, renforcées en haut et en bas par des tiges (93, 94), étant saisies parallèlement aux barres latérales correspondantes, alors que la feuille arrière est supportée par les extrémités des barres.

7. Equipement portable selon la revendication 1, dans lequel le support pour raccordement au bâti de support est sous la forme de la lettre Ω, et est relié au bâti au moyen de vis moletées (15).

8. Equipement portable selon la revendication 1, dans lequel le bâti de support de base est fixé sur un mur (P) d'un immeuble.

9. Equipement portable selon la revendication 1, dans lequel le bâti de support de base est fixé sur la partie interne du couvercle (51) d'un réceptacle parallélépipédique aplati (5) avec des parois rigides, comportant un boîtier sur lequel le couvercle est articulé, ce réceptacle agissant lorsqu'il est ouvert comme un support pour l'équipement.

10. Equipement portable selon la revendication 9, dans lequel le couvercle et le boîtier du réceptacle sont interconnectés par des ressorts à gaz (52), le boîtier et le couvercle ayant des pieds (53) sur leurs côtés étroits adjacents.

11. Equipement portable selon la revendication 9, dans lequel le réceptacle comprend, sur un côté étroit du couvercle, des pieds additionnels (110, 111) qui peuvent être ouverts au moyen de supports articulés afin d'augmenter leur surface de support.

12. Equipement portable selon la revendication 9, dans lequel le boîtier a des crémaillères (56, 57) pour le stockage des extensions verticales (58, 59), du bouchon supérieur correspondant, des tiges de maintien de feuille, des feuilles, des caméras vidéo, des bras de bâti vertical, et un bras horizontal pour la caméra vidéo centrale.

13. Equipement portable selon la revendication 9, dans lequel le couvercle du boîtier contient des bras latéraux du bâti, des barres de support de feuille supérieures et des câbles auxiliaires.
